# EUROPEAN PATENT SPECIFICATION

(11) **EP 3 859 555 B1**
(45) Date of publication and mention of the grant of the patent: **01.10.2025**
(21) Application number: 19934499.5
(22) Date of filing: 28.06.2019
(51) Int. Cl.: G06F 16/25, G06F 16/21

(54) **DATABASE ACCESS METHOD AND APPARATUS, COMPUTING DEVICE, AND COMPUTER PROGRAM PRODUCT**
DATENBANKZUGRIFFSVERFAHREN UND -VORRICHTUNG, RECHNERVORRICHTUNG UND COMPUTERPROGRAMMPRODUKT
PROCÉDÉ ET APPAREIL D'ACCÈS À UNE BASE DE DONNÉES, DISPOSITIF INFORMATIQUE ET PRODUIT PROGRAMME INFORMATIQUE

(43) Date of publication of application: 04.08.2021
(73) Proprietor: Huawei Cloud Computing Technologies Co., Ltd., Guizhou 550025 (CN)
(72) Inventor: GUO, Shoumin, Shenzhen, Guangdong 518129 (CN)
(74) Representative: Goddar, Heinz J.
(86) International application number: PCT/CN2019/093693
(87) International publication number: WO 2020/258249

(56) References cited:
- CN-A- 102 982 141
- CN-A- 104 331 457
- CN-A- 105 677 693
- CN-A- 106 293 887
- CN-A- 109 327 535
- US-A1- 2007 136 311
- US-A1- 2019 075 170
- MARCU ROXANA ET AL: "Security solution for healthcare hybrid cloud platform", 2014 18TH INTERNATIONAL CONFERENCE ON SYSTEM THEORY, CONTROL AND COMPUTING (ICSTCC), IEEE, 17 October 2014 (2014-10-17), pages 225 - 230, XP032704373, [retrieved on 20141211], DOI: 10.1109/ICSTCC.2014.6982420

## Description

### TECHNICAL FIELD

This application relates to the database field, and in particular, to a database access method, a database access initiation module, a database access service engine, a database access scheduling module, a computing device, and a computer program product.

### BACKGROUND

In the prior art, a database connection pool is deployed inside an application. One database connection pool provides a service for only one application to access a database instance.

In addition, a single application may be deployed on a plurality of servers in a distributed manner. A database connection pool of the application is deployed on each server. All connections in each database connection pool are used to connect to a same database instance. In other words, if the application needs to connect to a plurality of database instances through each server, a connection pool needs to be deployed for each database instance on each server. However, database connection pools, on different servers, that are used by the single application to access the same database instance cannot be shared between the different servers.

US 2019/0075170 A1 provides a transparency engine. The transparency engine can be provided between client applications and a database, and can operate as a proxy engine for the database and as a session abstraction layer for the client applications, to enable the client applications to utilize database features provided by the connection pool without code changes to the client applications. The transparency can keep track of session states, request boundaries and cursors to efficiently reuse the database connections across the client applications. The transparency engine can use the request boundaries and indicators from the database to detect safe places to drain database connections in the event of database outages.

### SUMMARY

The present invention is defined by the appended claims. Embodiments not falling within the scope of the claims are exemplary. In view of this, this application provides a database access method, a database access initiation module, a database access service engine, a computing device, and a computer program product, to access a database instance by using an application-independent connection.

According to a first aspect, in a database access method provided in this application, if an application needs to access a database instance, the application sends an access request of the application to a database access initiation module. The access request carries an identifier of the database instance.

When receiving the access request, the database access initiation module determines a database access service engine used to access the database instance, and sends the access request to the determined database access scope of the claims are exemplary. In view of this, this application provides a database access method, a database access initiation module, and a database access service engine, to access a database instance by using an application-independent connection.

According to a first aspect, in a database access method provided in this application, if an application needs to access a database instance, a database access scheduling module in a local area network actively establishes a communication connection to a database access service engine in a public cloud by using an identifier of the database access service engine. When establishing the communication connection, the application sends an access request of the application to a database access initiation module. The access request carries an identifier of the database instance.

When receiving the access request, the database access initiation module determines a database access service engine used to access the database instance, and sends the access request to the determined database access service engine. The database access service engine is deployed independently of the application.

The database access service engine may establish a connection to a database access implementation module (for example, a database instance or a database access scheduling module).

If the connection is established between the database access service engine and the database instance, the database access service engine may send the access request to the database instance through the connection, and the database instance processes the access request.

If the connection is established between the database access service engine and the database access scheduling module, the database access service engine may send the access request to the database access scheduling module through the connection. In this way, the database access scheduling module may send the access request to the database instance, so that the database instance can process the access request.

Compared with the prior art in which a connection provided by a connection pool inside an application is used to access a database instance, in this application, access to the database instance is implemented by using a database access service engine independent of the application. In addition, the connection used to access the database instance is established by the access service engine, and is not maintained by the application. This reduces load of the application.

In a possible design of the first aspect, when the database access initiation module receives the access request, the database access initiation module selects one database access service engine from a plurality of database access service engines, and sends the access request to the selected database access service engine. In this way, the plurality of database access service engines may share a pressure of forwarding a plurality of access requests.

In a possible design of the first aspect, when the database access initiation module receives the access request, the database access initiation module selects one database access service engine from a plurality of database access service engines based on load of the plurality of database access service engines. In this way, load sharing may be implemented among the plurality of database access service engines.

Optionally, load of each database access service engine is a quantity of connections established between the database access service engine and the database access implementation module (for example, the database instance or the database access scheduling module). A larger quantity indicates heavier load of the database access service engine. Conversely, a smaller quantity indicates lighter load of the database access service engine.

In a possible design of the first aspect, when the database access initiation module receives the access request, the database access initiation module selects a database access service engine with minimum load from a plurality of database access service engines. Optionally, load of each database access service engine is a quantity of connections established between the database access service engine and the database access implementation module (for example, the database instance or the database access scheduling module).

In a possible design of the first aspect, when the database access initiation module receives the access request, if the access request carries the identifier of the database instance, and a database access service engine that has established a connection to the database instance already exists, the database access service engine bound to the identifier of the database instance is determined.

In a possible design of the first aspect, when the database access initiation module receives the access request, if the access request carries an identifier of the database access scheduling module, and a database access service engine that has established a connection to the database access scheduling module already exists, the database access service engine bound to the database access scheduling module is determined. In this way, the database access initiation module sends the access request to the database access service engine, so that the database access scheduling module receives the access request from the database access service engine. Because a database instance specified in the access request is associated with the database access scheduling module, the database access scheduling module can forward the access request to the database instance specified in the access request only after the database access scheduling module receives the access request.

In a possible design of the first aspect, when the database access service engine receives the access request, the database access service engine establishes a connection between the database access service engine and the database instance based on the identifier of the database instance. In this way, based on the connection, data may be communicated between the database access service engine and the database instance. For example, the database access service engine sends the access request to the database instance. For example, the database instance sends a processing result corresponding to the access request to the database access service engine.

In a possible design of the first aspect, when the database access service engine receives the access request, if the access request carries a keyword for identifying a connection, the connection, identified by the keyword, that has been established between the database access service engine and the database instance is used to send the access request to the database instance. In this way, if the keyword is specified by the application, the application may access, based on the keyword, the same database instance through the same connection.

In a possible design of the first aspect, when the database access service engine receives the access request, if the access request does not carry the keyword for identifying the connection, the database access service engine establishes the connection between the database access service engine and the database instance based on the identifier of the database instance. Because the access request does not carry the keyword for identifying the connection, the database access service engine still needs to establish a new connection even if a connection already exists between the database access service engine and the database instance. Data related to the access request (for example, the access request or the processing result corresponding to the access request) is communicated between the database access service engine and the database instance through the newly established connection.

In a possible design of the first aspect, when the database access service engine receives the access request, if the access request carries the identifier of the database access scheduling module, the database access service engine sends the access request to the database access scheduling module.

For example, when a communication connection has been established between the database access service engine and the database access scheduling module, the application may specify the identifier of the database access scheduling module in the access request. In this way, the database access service engine may determine the communication connection based on the identifier of the database access scheduling module. Therefore, the database access service engine may continue to use the communication connection, to send the access request to the database access scheduling module.

If a plurality of applications separately specify a same identifier of the database access scheduling module in their own access requests, the database access service engine, the communication connection between the database access service engine and the database access scheduling module, and the database access scheduling module may be shared to communicate data related to these access requests.

In a possible design of the first aspect, after the database instance processes the access request and generates the processing result corresponding to the access request, if the database instance is directly connected to the database access service engine, the database instance sends the processing result to the database access service engine. Alternatively, if the database instance is connected to the database access scheduling module, the database instance sends the processing result to the database access scheduling module, so that the database access scheduling module forwards the processing result to the database access service engine.

The database access service engine sends the processing result to the database access initiation module. Correspondingly, the database access initiation module sends the processing result to the application.

In this way, the application may access the database instance through the access request, and obtain the processing result of the access request.

According to a second aspect, this application provides a database access apparatus. Functional modules included in the apparatus are configured to implement the steps performed by the database access initiation module in the method provided in the first aspect or any possible design of the first aspect.

This application provides another database access apparatus. Functional modules included in the apparatus are configured to implement the steps performed by the database access service engine in the method provided in the first aspect or any possible design of the first aspect.

This application provides another database access apparatus. Functional modules included in the apparatus are configured to implement the steps performed by the database access implementation module (for example, the database instance or the database access scheduling module) in the method provided in the first aspect or any possible design of the first aspect.

### BRIEF DESCRIPTION OF DRAWINGS

FIG. 1 is a schematic diagram of an application scenario to which this application is applicable;
FIG. 2 is a schematic diagram of an application scenario to which this application is applicable;
FIG. 3 is a schematic diagram of an application scenario to which this application is applicable;
FIG. 4 is a schematic flowchart of a database access method according to this application;
FIG. 5 is a schematic flowchart of a database access method according to this application;
FIG. 6 is a schematic diagram of a logical structure of a database access initiation module 600 according to this application;
FIG. 7 is a schematic diagram of a logical structure of a database access service engine 700 according to this application;
FIG. 8 is a schematic diagram of a logical structure of a database access scheduling module 800 according to this application; and
FIG. 9 is a schematic structural diagram of a computing device 900 according to this application.

### DESCRIPTION OF EMBODIMENTS

The following describes technical solutions provided by this application with reference to accompanying drawings.

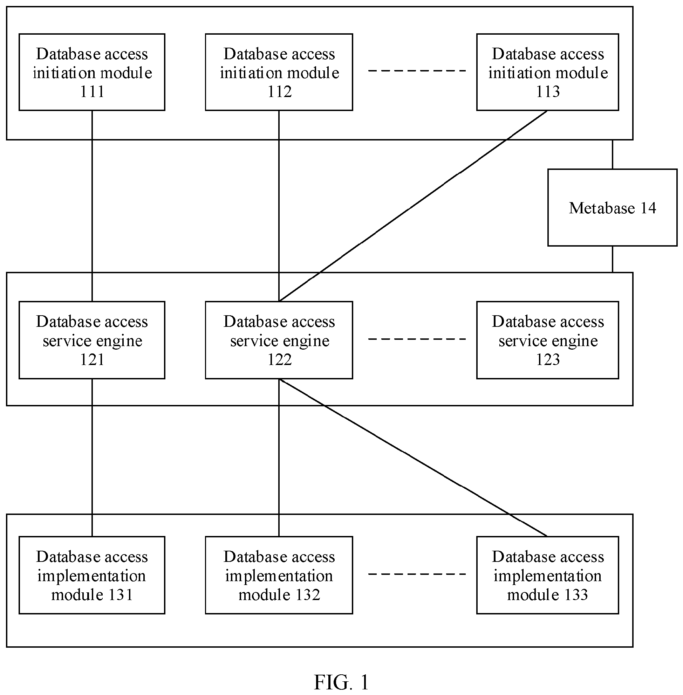

FIG. 1 is a possible scenario to which this application is applicable. A database access initiation module (for example, a database access initiation module 111, a database access initiation module 112, or a database access initiation module 113) is configured to receive an access request, and forward the access request to a database access service engine. The database access service engine (for example, a database access service engine 121, a database access service engine 122, or a database access service engine 123) is configured to forward the access request to a database access implementation module. The database access implementation module (for example, a database access implementation module 131, a database access implementation module 132, or a database access implementation module 133) is configured to schedule or process the access request.

In this application, the database access service engine is deployed independently of an application. For example, the database access service engine is not integrated into the application. For example, the database access service engine and the application are deployed on different servers. In this way, the database access service engine may serve different database access initiation modules.

Optionally, the database access initiation module may be integrated into the application. Optionally, the database access initiation module may be deployed independently of the application. For example, the application and the database access initiation module are deployed on a server on which the application is located.

The database access initiation module receives an access request from the application. In a possible implementation, the access request may include a statement in an SQL format, and "the statement in the SQL format" may be referred to as "an SQL statement" for short below. For example, a user may operate the application to enter an SQL statement, to trigger the application to generate an access request including the SQL statement.

Optionally, the database access initiation module may be implemented as a software development kit (software development kit, SDK).

In a possible implementation, each database access initiation module provides a service for a single application. Specifically, each database access initiation module receives an access request generated by an application for which the database access initiation module is responsible. For example, the database access initiation module 111 may be responsible for receiving an access request of an application. Both the database access initiation module 112 and the database access initiation module 113 may be responsible for receiving an access request of another application. For example, the another application may send an access request to the database access initiation module 112 or the database access initiation module 113. In this way, load balancing of receiving the access request of the another application may be implemented by using the database access initiation module 112 and the database access initiation module 113.

The database access initiation module sends the access request to the database access service engine.

For example, FIG. 1 is used as an example. The database access initiation module 111 may query a metabase 14, and determine, by using the metabase 14, that currently a database access service engine with minimum load is the database access service engine 121. Therefore, the database access initiation module 111 sends the access request of the application to the database access service engine 121. Load balancing may be performed between database access service engines.

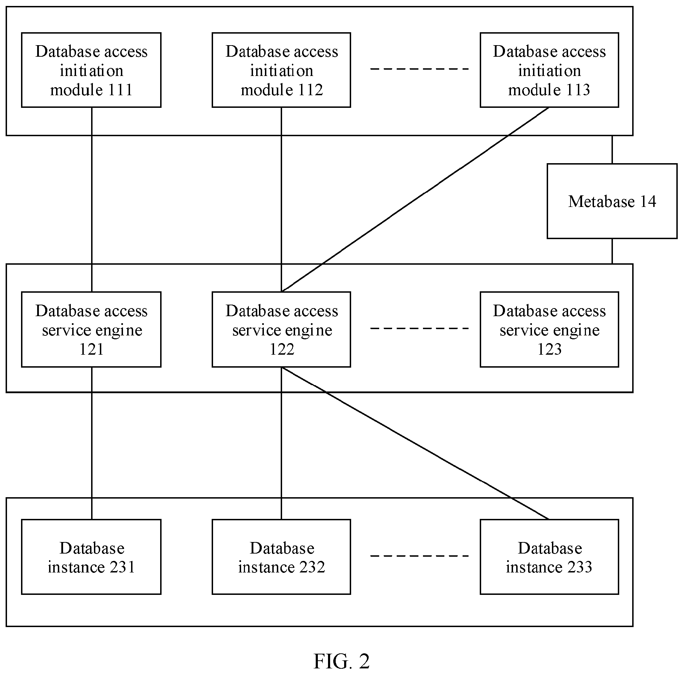

For example, with reference to FIG. 1 and FIG. 2, in a scenario in which the database access implementation module 131 is the database instance 231, if the application specifies, through the access request, an identifier of the to-be-accessed database instance 231 (for example, an internet protocol (Internet Protocol, IP) address and a port (port) number of the database instance 231), the database access initiation module 111 records, in the metabase 14, a binding relationship between the identifier of the database instance 231 and the database access service engine 121. Subsequently, when the database access initiation module 111 receives a new access request of the application, if the new access request carries the identifier of the database instance 231, the database access initiation module 111 finds the binding relationship in the metabase 14 based on the identifier of the database instance 231. Therefore, the new access request is sent to the database access service engine 121 specified by the binding relationship.

In addition, with reference to FIG. 1 and FIG. 2, in the scenario in which the database access implementation module 131 is the database instance 231, the database access service engine 121 establishes, based on the identifier of the database instance 231, a connection (connection) for accessing the database instance 231. In a possible implementation, after the database access service engine 121 successfully establishes the connection to the database instance 231, the database access service engine 121 records a keyword (key) used to identify the connection. Optionally, the database access service engine 121 may further send the keyword to the database access initiation module 111, so that the database access initiation module 111 feeds back the keyword to the application.

Optionally, the database access service engine 121 may further record, in the metabase 14, a quantity of connections established by the database access service engine 121. In this way, a larger quantity of connections, recorded in the metabase 14, that belong to the database access service engine 121 indicates heavier load of the database access service engine 121. Conversely, a smaller quantity of connections, recorded in the metabase 14, that belong to the database access service engine 121 indicates lighter load of the database access service engine 121. Similarly, the metabase 14 records a quantity of connections that each database access service engine has. Subsequently, the database access initiation module may perform load balancing among a plurality of database access service engines based on the quantity of connections. For example, the database access service engine with minimum load is selected from the plurality of database access service engines shown in FIG. 1 based on the quantity of connections.

In a possible implementation of this application, with reference to FIG. 1 and FIG. 2, the database access implementation module may be a database instance. When the database instance receives the access request sent by the database access service engine, the database instance processes the access request. For example, the database access implementation module 133 is the database instance 233. After receiving an access request sent by the database access service engine 122, the database instance 233 processes an SQL statement carried in the access request.

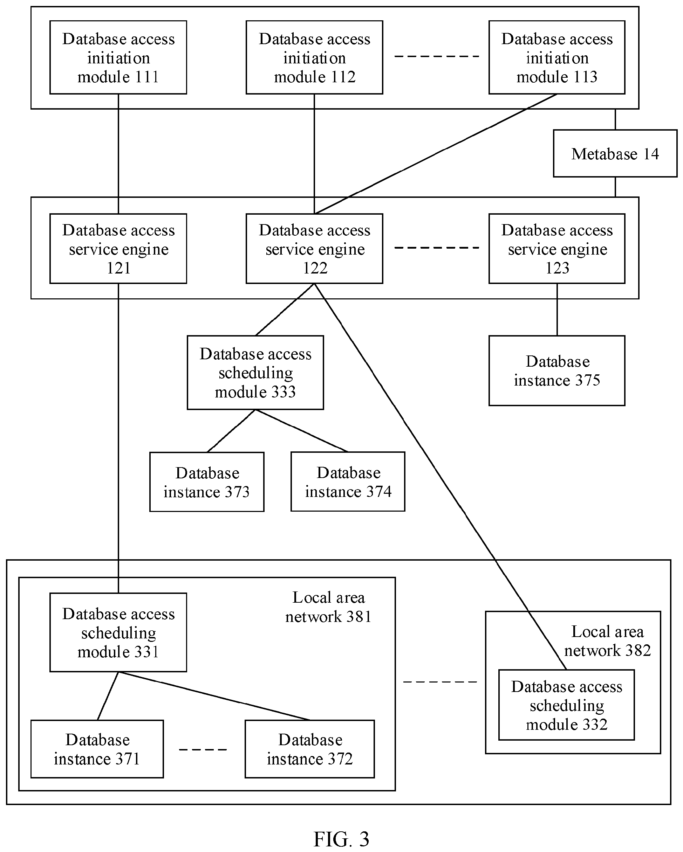

In a possible implementation of this application, with reference to FIG. 1 and FIG. 3, the database access implementation module may be a database access scheduling module. The database access scheduling module is communicatively connected to at least one database instance. When the database access scheduling module receives an access request sent by the database access service engine, the database access scheduling module sends the access request to a database instance specified in the access request. For example, after a database access scheduling module 333 receives an access request sent by the database access service engine 122, if the access request carries an identifier of a database instance 373, the database access scheduling module 333 sends the access request to the database instance 373. For example, after a database access scheduling module 331 receives an access request sent by the database access service engine 121, if the access request carries an identifier of a database instance 372, the database access scheduling module 333 sends the access request to the database instance 372.

In a possible implementation of this application, which is not part of the invention, as shown in FIG. 3, if the database access scheduling module and the database access service engine are deployed in a same network, for example, both the database access scheduling module 333 and the database access service engine 122 are deployed in a public cloud to provide a service, to be specific, both the database access scheduling module 333 and the database access service engine 122 are deployed in a network used by the public cloud, the database access scheduling module 333 may access the database instance 373 and a database instance 374. After the database access scheduling module 333 receives an access request sent by the database access service engine 122, if the access request carries the identifier of the database instance 373, the access request is sent to the database instance 373; if the access request carries an identifier of the database instance 374, the access request is sent to the database instance 374. Optionally, both the database instance 373 and the database instance 374 are deployed in the public cloud to provide a service. To be specific, both the database instance 373 and the database instance 374 are deployed in the network used by the public cloud.

In the implementation of this application, as shown in FIG. 3, if the database access implementation module is deployed in a local area network, the database access implementation module is the database access scheduling module 331 in the local area network. The database access scheduling module 331 accesses a database instance in the local area network. For example, the database access scheduling module 331 in a local area network 381 receives an access request sent by the database access service engine 121. The database access scheduling module 331 sends the access request to the database instance 372 based on the identifier of the database instance 372 specified in the access request. The database instance 372 processes the access request, for example, executes an SQL statement carried in the access request.

In the architecture shown in FIG. 3, after the database access scheduling module 333 establishes a communication connection to the database access service engine 122, the database access service engine 122 records, in the metabase 14, a binding relationship between an identifier of the database access scheduling module 332 and the database access service engine 122. Subsequently, if an access request received by the database access initiation module 112 records the identifier of the database access scheduling module 333, the database access initiation module 112 sends the access request to the database access service engine 122 based on the binding relationship recorded in the metabase 14, so that the database access service engine 122 can finally forward the access request to the database access scheduling module 333. It may be learned that a binding relationship between the database access scheduling module and the database access service engine is recorded in the metabase 14.

For example, in an application scenario, the database access service engine 121 is deployed in the public cloud, and the database access scheduling module 331 and a plurality of database instances (for example, the database instance 371 and the database instance 372) are deployed in the local area network 381. The database access scheduling module 331 obtains an IP address of the database access service engine 121. For example, the IP address of the database access service engine 121 is manually entered into the database access scheduling module 331. The database access scheduling module 331 uses the IP address to request to establish a communication connection to the database access service engine 121, for example, to establish a communication connection over a transmission control protocol (Transmission Control Protocol, TCP). In this way, the database access service engine 121 may establish the communication connection to the database access scheduling module 331, so that the database access service engine 121 in the public cloud may access the plurality of database instances (for example, the database instance 371 and the database instance 372) in the local area network 381 by using the database access scheduling module 331.

Similarly, the database access service engine 122 in the public cloud accesses a plurality of database instances (not shown in FIG. 3) in a local area network 382 by using a database access scheduling module 332.

In this way, after a database access scheduling module in the local area network actively establishes a communication connection to a database access service engine in the public cloud, the database access service engine in the public cloud may access a database instance in the local area network by using the database access scheduling module.

In a possible application scenario, the local area network is a private cloud network.

In a possible implementation of this application, in the architecture shown in FIG. 3, after the database access scheduling module 331 in the local area network 381 actively establishes the communication connection to the database access service engine 121, the database access service engine 121 records, in the metabase 14, a binding relationship between an identifier of the database access scheduling module 331 and the database access service engine 121. Subsequently, if an access request received by the database access initiation module 331 records the identifier of the database access scheduling module 331, the database access initiation module 331 sends the access request to the database access service engine 121 based on the binding relationship recorded in the metabase 14, so that the database access service engine 121 can forward the access request to the database access scheduling module 331. Similarly, after the database access scheduling module 332 in the local area network 382 actively establishes a communication connection to the database access service engine 122, the database access service engine 122 records, in the metabase 14, a binding relationship between an identifier of the database access scheduling module 332 and the database access service engine 122. Similarly, after the database access scheduling module 333 actively establishes the communication connection to the database access service engine 122, the database access service engine 122 records, in the metabase 14, the binding relationship between the identifier of the database access scheduling module 333 and the database access service engine 122. It may be learned that the binding relationship between the database access scheduling module and the database access service engine is recorded in the metabase 14 in this application.

In a possible implementation, in the architecture shown in FIG. 3, if the database access service engine is directly connected to the database access scheduling module, a binding relationship between an identifier of the database access scheduling module and the database access service engine is recorded in the metabase 14; if the database access service engine is directly connected to the database instance, a binding relationship between the database instance and the database access service engine is recorded in the metabase 14. In this way, in the architecture shown in FIG. 3, when the database access initiation module searches the metabase 14 to determine a destination of the access request, if the database access service engine is directly connected to the database access scheduling module, the identifier of the database access scheduling module carried in the access request is used to search for the binding relationship to determine the database access service engine; if the database access service engine is directly connected to the database instance, an identifier of the database instance carried in the access request is used to search for the binding relationship to determine the database access service engine.

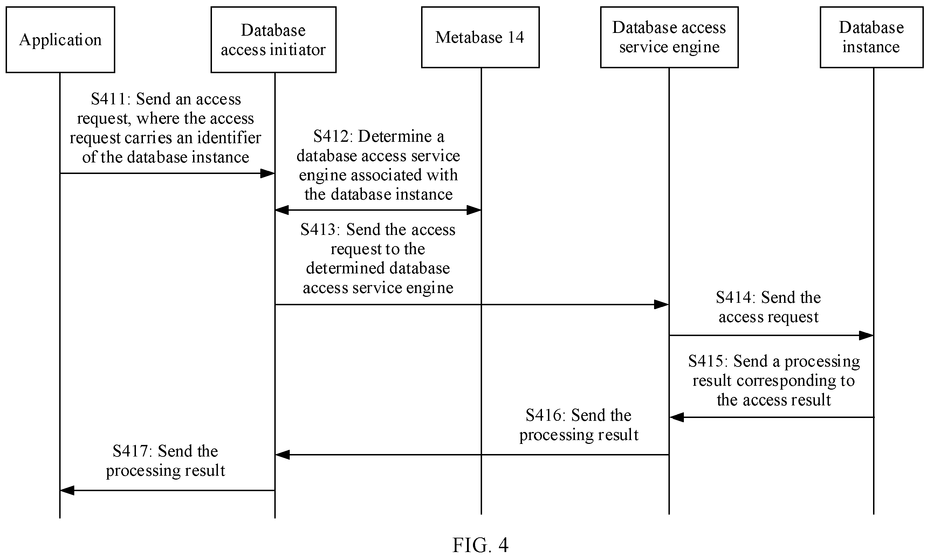

Based on the architecture shown in FIG. 2, this application provides a database access method. With reference to FIG. 2, a procedure of the database access method is shown FIG. 4. The procedure includes step S411 to step S417.

Step S411: An application sends an access request to a database access initiation module.

Specifically, the application sends the access request to the database access initiation module that provides a service for the application. For example, the database access initiation module 111 provides a service for an application. For an access request generated by the application, the application sends the access request to the database access initiation module 111.

The access request carries an identifier of a database instance. In this way, the database instance used to process the access request may be determined based on the identifier of the database instance.

For example, the identifier of the database instance is an IP address of the database instance. For example, the identifier of the database instance is the IP address and a port number of the database instance.

For example, the identifier of the database instance includes a name of the database instance. In this way, whether the database instance is a database instance that needs to be accessed may further be determined based on the name of the database instance.

For example, the identifier of the database instance may be one or a combination of the following parameters: the IP address of the database instance, or the IP address and the port number, or the name of the database instance.

For example, the access request may carry a statement in an SQL format. In this way, the database instance may execute the statement, carried in the access request, that is in the SQL format.

For example, the access request carries an identifier of a service currently provided by the application.

Step S412: The database access initiation module determines a database access service engine associated with the database instance.

Step S413: The database access initiation module sends the access request to the determined database access service engine.

In a possible implementation, if no database access service engine is allocated to the database instance specified by the identifier, of the database instance, that is carried in the access request, the database access initiation module selects one database access service engine from a plurality of database access service engines. The database access initiation module sends the access request to the selected database access service engine. Correspondingly, the database access initiation module records, in the metabase 14, a binding relationship between the identifier of the database instance and the database access service engine.

For example, FIG. 2 is used as an example. When receiving an access request sent by an application, the database access initiation module 111 may query the metabase 14. If a query result is that no database access service engine is allocated to a database instance specified by an identifier, of the database instance, that is carried in the access request, one database access service engine is selected from a plurality of database access service engines (for example, the database access service engine 121, the database access service engine 122, and the database access service engine 123). For example, the database access service engine 121 is selected. In this case, the database access initiation module 111 sends the access request to the database access service engine 121.

For example, FIG. 2 is used as an example. When receiving an access request sent by an application, the database access initiation module 111 may query the metabase 14. If a query result is that no database access service engine is allocated to a database instance specified by an identifier, of the database instance, that is carried in the access request, one database access service engine is selected from a plurality of database access service engines (for example, the database access service engine 121, the database access service engine 122, and the database access service engine 123) based on load of the plurality of database access service engines. For example, the database access service engine 121 is selected. In this case, the database access initiation module 111 sends the access request to the database access service engine 121.

For example, FIG. 2 is used as an example. When receiving an access request sent by an application, the database access initiation module 111 may query the metabase 14. If a query result is that no database access service engine is allocated to a database instance specified by an identifier, of the database instance, that is carried in the access request, a database access service engine with minimum load is selected from a plurality of database access service engines (for example, the database access service engine 121, the database access service engine 122, and the database access service engine 123). It is assumed that currently the database access service engine with the minimum load is the database access service engine 121. In this case, the database access initiation module 111 sends the access request to the database access service engine 121. In addition, the database access initiation module 111 records, in the metabase 14, a binding relationship between the database access service engine 121 and the identifier of the database instance.

In a possible implementation, if the binding relationship corresponding to the identifier, of the database instance, that is carried in the access request is recorded in the metabase 14, the database access initiation module queries the metabase 14 to determine the database access service engine specified by the binding relationship. In this case, the database access initiation module sends the access request to the determined database access service engine.

In a possible implementation, each database access service engine (for example, the database access service engine 121, the database access service engine 122, or the database access service engine 123) periodically records load information (for example, a quantity of deployed connections) and heartbeat information of each database access service engine in the metabase 14. In this way, when determining, by using the metabase 14, the database access service engine configured to send the access request, the database access initiation module may further determine, based on heartbeat information of the database access service engine, whether the database access service engine is available. If the database access service engine is available, the database access initiation module performs the step S413 to send the access request to the database access service engine. If the database access service engine is unavailable, the database access initiation module re-performs the step S412 to select a new database access service engine.

In a possible implementation in which the database access initiation module determines that the database access service engine is available, the database access initiation module determines, based on the heartbeat information that is of the database access service engine and that is recorded in the metabase 14, that the database access service engine does not break down, or that a communication connection of the database access service engine is connected.

Step S414: The database access service engine sends the access request to the database instance.

In a possible implementation, if the access request carries a keyword (key) used to identify a connection (connection), the connection is a connection between and the database instance specified in the access request and the database access service engine, and the connection is previously established, the database access service engine sends the access request to the database instance through the connection. In this way, if the keyword for identifying the connection is added to a plurality of access requests sent by the application, these access requests are all sent to the database instance through the same connection. If the plurality of access requests are continuously sent, transaction consistency of a transaction formed by the plurality of access requests is ensured by using the same connection to send the plurality of access requests to the database instance.

In a possible implementation, if the access request does not carry the keyword used to identify the connection, the database access service engine may establish, for the access request, a new connection between the database access service engine and the database instance specified in the access request. For example, the connection established between the database access service engine and the database instance may be a communication connection, for example, a JDBC (Java database connectivity) connection.

For the new connection established between the database access service engine and the database instance, the database access service engine records a keyword (key) used to identify the connection. FIG. 2 is used as an example. The database access engine 121 records a new connection established between the database access service engine 121 and the database instance 231. The database access engine 122 records a new connection established between the database access service engine 122 and the database instance 232. The database access engine 122 records a keyword used to identify the connection, and records a binding relationship between the keyword and the database instance 231. Subsequently, the database access service engine 122 may determine the keyword based on the binding relationship, to determine the connection specified by the keyword.

In addition, because the access request does not carry the keyword for identifying the connection, the database access service engine still needs to establish a new connection even if a connection already exists between the database access service engine and the database instance. Data related to the access request (for example, the access request or a processing result corresponding to the access request) is communicated between the database access service engine and the database instance through the newly established connection.

Optionally, the database access service engine may further send the keyword to the database access initiation module that previously forwards the access request, so that the database access initiation module feeds back the keyword to the application that previously generates the access request. Subsequently, the application may add the keyword to a new access request. Correspondingly, after receiving the keyword by using the database access initiation module, the database access service engine sends the new access request to a database instance associated with the keyword. In this way, it is ensured that all new access requests, sent by the application, that carry the keyword are sent to the database instance for processing, to ensure consistency of a transaction formed by the plurality of new access requests that carry the keyword.

For example, for the new connection established between the database access service engine 121 and the database instance 231, the database access service engine 121 may send a keyword (used to identify the newly established connection) to the database access initiation module 111, so that the database access initiation module 111 can feed back the keyword to the application that previously generates the access request. Subsequently, the application may add the keyword to a new access request. Correspondingly, after receiving the keyword by using the database access initiation module 111, the database access service engine 121 sends the new access request to the database instance 231 associated with the keyword.

Step S415: The database instance sends the processing result corresponding to the access request to the database access service engine.

Specifically, after receiving the access request sent by the database access service engine, the database instance processes the access request, and obtains the processing result. The database instance sends the processing result corresponding to the access request to the database access service engine.

For example, the database instance 231 receives an access request sent by the access service engine 121. The database instance 231 processes the access request, for example, executes a statement, in an SQL format, that is carried in the access request. For example, data is queried by using the statement in the SQL format, and a query result is obtained. The database instance 231 sends a processing result (for example, the query result) corresponding to the access request to the access service engine 121. If a JDBC connection is established between the database instance 231 and the access service engine 121, the JDBC connection is used to communicate the access request and the processing result between the database instance 231 and the access service engine 121.

Step S416: The database access service engine sends the processing result corresponding to the access request to the database access initiation module.

Specifically, the database access service engine that previously forwards the access request sends the processing result corresponding to the access request to the database access initiation module that previously forwards the access request. For example, if the access request is forwarded to the database instance 231 by using the database access initiation module 111 and the database access service engine 121, the database instance 231 sends the processing result corresponding to the access request to the database access service engine 121, so that the database access service engine 121 sends the processing result to the database access initiation module 111.

Step S417: The database access initiation module sends the processing result corresponding to the access result to the application.

Specifically, the database access initiation module that previously forwards the access request sends the processing result corresponding to the access request to the application that generates the access request (namely, the application served by the database access initiation module). For example, after receiving the processing result corresponding to the access request from the access service engine 121, the database access initiation module 111 sends the processing result to the application that previously generates the access request. In this way, the application obtains the processing result corresponding to the access request, for example, the query result obtained by the database instance 231 by querying based on the statement, in the SQL format, that is included in the access request.

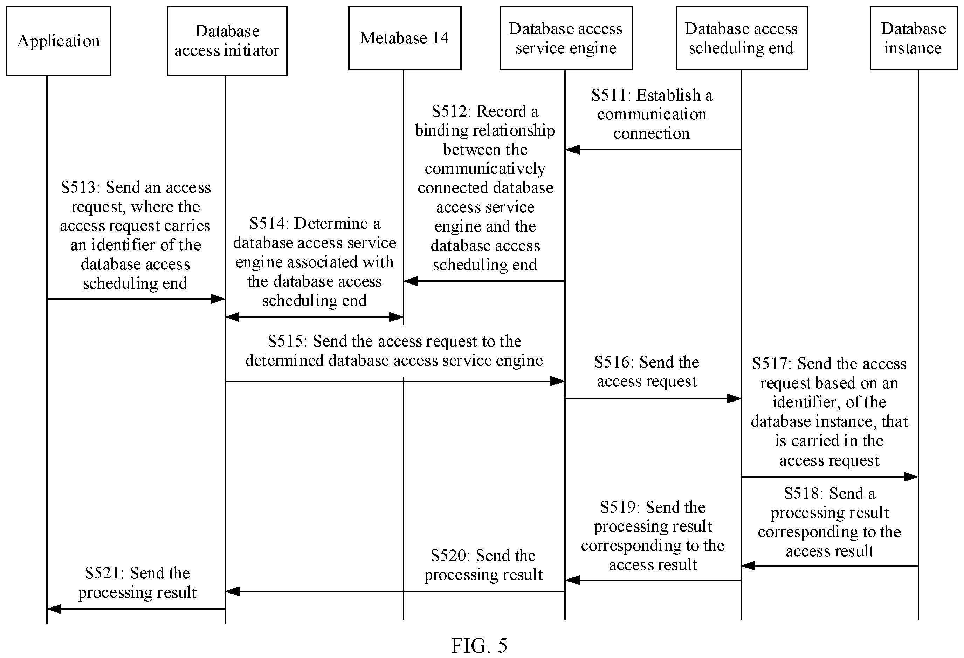

Based on the architecture shown in FIG. 3, this application provides a database access method. With reference to FIG. 3, a procedure of the database access method is shown FIG. 5. The procedure includes step S511 to step S521.

Step S511: A database access scheduling module establishes a communication connection to a database access engine.

In a possible implementation, which is not part of the invention, with reference to FIG. 3, the database access scheduling module and the database access service engine are deployed in a same network, and a communication connection may be established between the database access scheduling module and the database access service engine in the network. For example, both the database access scheduling module 333 and the database access service engine 122 are deployed in a public cloud to provide a service. To be specific, both the database access scheduling module 333 and the database access service engine 122 are deployed in a network used by the public cloud. The database access scheduling module 333 establishes a communication connection to the database access service engine 122 by using an IP address of the database access service engine 122. Alternatively, the database access service engine 122 establishes a communication connection to the database access scheduling module 333 by using an IP address of the database access scheduling module 333.

In the implementation, with reference to FIG. 3, the database access scheduling module is located in a local area network. The database access engine is not located in the local area network. In other words, the database access engine and the database access scheduling module are not located in the same local area network. For example, the database access scheduling module 331 in the local area network 381 obtains the IP address of the database access service engine 121. For example, the IP address of the database access service engine 121 is recorded in the database access scheduling module 331 in advance. For example, the IP address of the database access service engine 121 is manually entered into the database access scheduling module 331. The database access scheduling module 331 actively requests to establish a communication connection (for example, the communication connection may be a TCP-based communication connection) to the database access service engine 121 based on the IP address. In this way, the database access scheduling module 331 may establish the communication connection to the database access service engine 121. Similarly, the database access scheduling module 332 may actively establish a communication connection to the database access service engine 122 based on the IP address of the database access service engine 122. The database access scheduling module 333 may actively establish the communication connection to the database access service engine 122 based on the IP address of the database access service engine 122. It may be learned that each database access scheduling module may actively establish a communication connection to the database access service engine based on an IP address of the database access service engine.

It should be learned that the communication connection established between the database access scheduling module and the database access engine may be the TCP-based communication connection, or may be a communication connection established over another protocol. In this way, based on the communication connection, data may be communicated between the database access scheduling module and the database access engine.

When the database access scheduling module successfully establishes the communication connection (for example, the communication connection may be the TCP-based communication connection) to the database access engine, the database access engine records a binding relationship between an identifier of the database access scheduling module and the communication connection.

For example, when the database access scheduling module 331 successfully establishes the communication connection to the database access service engine 121, the database access service engine 121 records a binding relationship between the identifier of the database access scheduling module 331 and the communication connection (the communication connection between the database access scheduling module 331 and database access service engine 121). When the database access scheduling module 332 successfully establishes the communication connection to the database access service engine 122, the database access service engine 122 records a binding relationship between the identifier of the database access scheduling module 332 and the communication connection (the communication connection between the database access scheduling module 332 and database access service engine 122). When the database access scheduling module 333 successfully establishes the communication connection to the database access service engine 122, the database access service engine 122 records a binding relationship between the identifier of the database access scheduling module 333 and the communication connection (the communication connection between the database access scheduling module 333 and database access service engine 122).

Step S512: The database access engine records, in the metabase 14, a binding relationship between the communicatively connected database access service engine and the database access scheduling module.

In a possible implementation, a single database access scheduling module actively requests to establish a communication connection to a single database access service engine. If the communication connection is successfully established, the database access engine records, in the metabase 14, a binding relationship between the database access scheduling module and the database access service engine.

The binding relationship between the single database access scheduling module and the single database access service engine may specifically include an identifier of the database access scheduling module and an identifier of the database access service engine.

For example, the database access scheduling module 332 may actively establish the communication connection to the database access service engine 122 by using the IP address of the database access service engine 122. If the communication connection is successfully established, the database access service engine 122 records, in the metabase 14, a binding relationship corresponding to the communication connection. The binding relationship includes the identifier of the database access scheduling module 332 (for example, a keyword of the database access scheduling module 332) and an identifier of the database access service engine 122 (for example, the IP address of the database access service engine 122). Similarly, the database access scheduling module 333 may actively establish the communication connection to the database access service engine 122 by using the IP address of the database access service engine 122. If the communication connection is successfully established, the database access service engine 122 records, in the metabase 14, a binding relationship corresponding to the communication connection. The binding relationship includes the identifier of the database access scheduling module 333 (for example, a keyword of the database access scheduling module 333) and the identifier of the database access service engine 122 (for example, the IP address of the database access service engine 122).

In this way, load of the single database access service engine may be determined based on a quantity, recorded in the metabase 14, of binding relationships of the database access service engine. Optionally, as shown in FIG. 3, the binding relationship may be the binding relationship between the database access scheduling module and the database access service engine (for example, a binding relationship between the identifier of the database access scheduling module 333 and the identifier of the database access service engine 122, or a binding relationship between the identifier of the database access scheduling module 331 and the identifier of the database access service engine 121), or the binding relationship may be the binding relationship between an identifier of a database instance and the database access service engine (for example, a binding relationship between the identifier of the database instance 374 and the database access service engine 123). In this way, all binding relationships of the database access service engine may be comprehensively considered to evaluate the load of the database access service engine.

In addition, a database access initiation module may search the metabase 14 based on the identifier, of the database access scheduling module, that is carried in the access request, and find a binding relationship matching the identifier of the database access scheduling module. In this way, the access request is sent to the database access service engine specified by the binding relationship.

Step S513: An application sends an access request to the database access initiation module.

Specifically, the application sends the access request to the database access initiation module that provides a service for the application. For example, the database access initiation module 111 provides a service for an application. For an access request generated by the application, the application sends the access request to the database access initiation module 111.

The access request carries an identifier of the database access scheduling module. The identifier of the database access scheduling module may be an IP address of the database access scheduling module. In a possible implementation, the identifier of the database access scheduling module may be the IP address and a port number of the database access scheduling module.

In addition, the access request carries the identifier of the database instance. In this way, the database instance used to process the access request may be determined by using the identifier of the database instance.

For example, the identifier of the database instance is an IP address of the database instance. For example, the identifier of the database instance is the IP address and a port number of the database instance.

For example, the identifier of the database instance includes a name of the database instance. In this way, whether the database instance is a database instance that needs to be accessed may further be determined based on the name of the database instance.

For example, the identifier of the database instance may be one or a combination of the following parameters: the IP address of the database instance, or the IP address and the port number, or the database instance.

For example, the access request may carry a statement in an SQL format. In this way, the database instance may execute the statement, carried in the access request, that is in the SQL format.

For example, the access request carries an identifier of a service currently provided by the application.

Step S514: The database access initiation module determines a database access service engine associated with the database access scheduling module.

Step S515: The database access initiation module sends the access request to the determined database access service engine.

Specifically, the database access initiation module searches the metabase 14 based on the identifier, of the database access scheduling module, that is carried in the access request, and find the binding relationship matching the identifier of the database access scheduling module. The database access initiation module sends the access request to the database access service engine specified by the binding relationship.

For example, the database access initiation module 113 uses the identifier that is of the database access scheduling module 333 and that is carried in the access request to find, in the metabase 14, a binding relationship corresponding to the identifier of the database access scheduling module 333. The binding relationship records the identifier of the database access service engine 122. In this case, the database access initiation module 113 sends the access request to the database access service engine 122.

For example, the database access initiation module 111 uses the identifier that is of the database access scheduling module 331 and that is carried in the access request to find, in the metabase 14, a binding relationship corresponding to the identifier of the database access scheduling module 331. The binding relationship records the identifier of the database access service engine 121. In this case, the database access initiation module 111 sends the access request to the database access service engine 121.

Step S516: The database access service engine sends the access request to the database access scheduling module.

Specifically, the access request carries the identifier of the database access scheduling module. The database access service engine searches, based on the identifier of the database access scheduling module, for the binding relationship matching the identifier of the database access scheduling module. The binding relationship records the identifier of the database access scheduling module and the communication connection between the database access service engine and the database access scheduling module. In this way, the database access service engine sends the access request to the database access scheduling module based on the communication connection.

For example, with reference to FIG. 3, the database access service engine 121 records the binding relationship between the identifier of the database access scheduling module 331 and the communication connection (the communication connection between the database access scheduling module 331 and the database access service engine 121). When the database access service engine 121 receives an access request, if the access request carries the identifier of the database access scheduling module 331, the database access service engine 121 sends the access request to the database access scheduling module 331 based on the communication connection recorded in the binding relationship.

For example, with reference to FIG. 3, the database access service engine 122 records the binding relationship between the identifier of the database access scheduling module 332 and the communication connection (the communication connection between the database access scheduling module 332 and the database access service engine 122). When the database access service engine 122 receives an access request, if the access request carries the identifier of the database access scheduling module 332, the database access service engine 122 sends the access request to the database access scheduling module 332 based on the communication connection recorded in the binding relationship.

For example, with reference to FIG. 3, the database access service engine 122 records the binding relationship between the identifier of the database access scheduling module 333 and the communication connection (the communication connection between the database access scheduling module 333 and the database access service engine 122). When the database access service engine 122 receives an access request, if the access request carries the identifier of the database access scheduling module 333, the database access service engine 122 sends the access request to the database access scheduling module 333 based on the communication connection recorded in the binding relationship.

Step S517: The database access scheduling module sends the access request to a database instance specified by the access request.

Specifically, the access request carries an identifier of the database instance. The database access scheduling module sends the access request to the database instance specified by the identifier. Optionally, the database access scheduling module and the database instance are located in a same local area network.

For example, in the local area network 381, when the database access scheduling module 331 receives an access request, if the access request carries the identifier of the database instance 371, the database access scheduling module 331 sends the access request to the database instance 371; if the access request carries the identifier of the database instance 372, the database access scheduling module 331 sends the access request to the database instance 372, so that the database instance 372 can process the access request.

For example, when the database access scheduling module 333 receives an access request, if the access request carries the identifier of the database instance 373, the database access scheduling module 333 sends the access request to the database instance 373; if the access request carries the identifier of the database instance 374, the database access scheduling module 333 sends the access request to the database instance 374.

The database instance processes the access request and obtains a processing result. For example, the access request carries a statement in an SQL format. The database instance performs data query based on the statement in the SQL format, to obtain a query result.

Step S518: The database instance sends the processing result corresponding to the access request to the database access scheduling module.

Specifically, the database instance sends, to the database access scheduling module that previously forwards the access request to the database instance, the processing result corresponding to the access request.

For example, if the database access scheduling module 331 previously sends an access request to the database instance 371, the database instance 371 processes the access request to obtain a processing result, and correspondingly sends the processing result to the database access scheduling module 331.

For example, if the database access scheduling module 333 previously sends an access request to the database instance 373, the database instance 373 processes the access request to obtain a processing result, and correspondingly sends the processing result to the database access scheduling module 333.

Step S519: The database access scheduling module sends the processing result corresponding to the access request to the database access service engine.

Specifically, the database access service engine is the database access service engine that previously sends the access request to the database access scheduling module. After the database access scheduling module obtains the processing result corresponding to the access request from the database instance, the database access scheduling module sends the processing result to the database access service engine.

For example, after receiving the processing result corresponding to the access request, the database access scheduling module 331 sends the processing result to the database access service engine 121 by using the communication connection between the database access scheduling module 331 and the database access service engine 121.

For example, after receiving the processing result corresponding to the access request, the database access scheduling module 333 sends the processing result to the database access service engine 122 by using the communication connection between the database access scheduling module 333 and the database access service engine 122.

Step S520: The database access service engine sends the processing result corresponding to the access request to the database access initiation module.

Specifically, the database access service engine that previously forwards the access request sends the processing result corresponding to the access request to the database access initiation module that previously forwards the access request.

For example, if the access request is forwarded to the database access scheduling module 331 by using the database access initiation module 111 and the database access service engine 121, after the database access scheduling module 331 sends the processing result corresponding to the access request to the database access service engine 121, the database access service engine 121 sends the processing result to the database access initiation module 111.

For example, if the access request is forwarded to the database access scheduling module 333 by using the database access initiation module 112 and the database access service engine 122, after the database access scheduling module 333 sends the processing result corresponding to the access request to the database access service engine 122, the database access service engine 122 sends the processing result to the database access initiation module 112.

Step S521: The database access initiation module sends the processing result corresponding to the access result to the application.

Specifically, the database access initiation module that previously forwards the access request sends the processing result corresponding to the access request to the application that generates the access request (namely, the application served by the database access initiation module). For example, after receiving the processing result corresponding to the access request from the access service engine 121, the database access initiation module 111 sends the processing result to the application that previously generates the access request. In this way, the application obtains the processing result corresponding to the access request, for example, a query result obtained by the database instance 231 by querying based on the statement, in the SQL format, that is included in the access request.

If the database instance is located in the local area network, the application may access the database instance in the local area network by performing the step S511 to the step S521. In an application scenario, the application, the database access initiation module 111, and the access service engine 121 are all deployed in the public cloud, and the database access scheduling module 331, the database instance 371, and the database instance 372 are deployed in a private cloud. The network used by the public cloud is different from the local area network 381 used by the private cloud. However, the database access scheduling module 331 successfully establishes the communication connection to the access service engine 121 in advance by using the IP address of the access service engine 121. Based on the communication connection, the application may access the database access scheduling module 331 in the local area network 381 by using the access service engine 121. In this way, indirect access to a database instance (for example, the database instance 371 or the database instance 372) in the local area network 381 is implemented.

If the database instance and the database access service engine are located in a same network (for example, the network used by the public cloud), the application may access the database instance in the same network by performing the step S511 to the step S521.

Based on the architecture shown in FIG. 3, this application provides a database access method. With reference to FIG. 3, in the procedure of the database access method shown in FIG. 5, the steps included in the database access method are further optimized from a perspective of security.

In a possible implementation of the step S511, when actively establishing the communication connection to the database access engine, the database access scheduling module sends a public keyword of the database access engine to the database access engine, so that the database access engine performs, based on the public keyword, authentication on whether to agree to establish the communication connection. In addition, if the communication connection is successfully established, the database access scheduling module uses the public keyword to encrypt data that needs to be sent to the database access engine.

For example, in the architecture shown in FIG. 3, the database access engine 122 generates a public keyword and a private keyword that are used by the database access engine 122, and stores the public keyword and the private keyword in the metabase 14. The database access scheduling module requests, by using the public keyword of the database access engine 122, to establish a communication connection to the database access engine 122, and the database access engine 122 uses the public keyword to query the metabase 14. If the metabase 14 records that the public keyword is the public keyword of the database access engine 122, authentication succeeds, the database access engine 122 successfully establishes the communication connection to the database access scheduling module. Subsequently, based on the communication connection between the database access engine 122 and the database access scheduling module (for example, the database access scheduling module 332 or the database access scheduling module 333), for data that needs to be sent by the database access scheduling module to the database access engine 122, the database access scheduling module encrypts the data by using the public keyword of the database access engine 122, and then sends the encrypted data to the database access engine 122 based on the communication connection.

In a possible implementation of the step S518, for the processing result, corresponding to the access request, that is sent by the database access scheduling module to the database access engine, the database access scheduling module encrypts the processing result by using the public keyword of the database access engine, and then sends the encrypted processing result to the database access engine.

For example, in the architecture shown in FIG. 3, after the database access scheduling module 333 receives the processing result corresponding to the access request from the database instance 373, the database access scheduling module 333 encrypts the processing result by using the public keyword of the database access engine 122, and sends the encrypted processing result to the database access engine 122.

In a possible implementation, data (for example, an access request generated by an application) sent by the database access engine to the database access scheduling module is encrypted by using a public keyword of the database access scheduling module, and the database access engine sends the encrypted data to the database access scheduling module. Correspondingly, the database access scheduling module decrypts the data from the encrypted data by using a private keyword of the database access scheduling module.

For example, the database access scheduling module 332 generates a public keyword and a private keyword that are used by the database access scheduling module 332, and stores the public keyword and the private keyword. The database access scheduling module 332 sends the public keyword to the database access engine 122. Subsequently, the database access engine 122 encrypts the access request by using the public keyword, and then sends the encrypted access request to the database access scheduling module 332. Correspondingly, the database access scheduling module 332 decrypts the access request from the encrypted access request by using the private keyword.

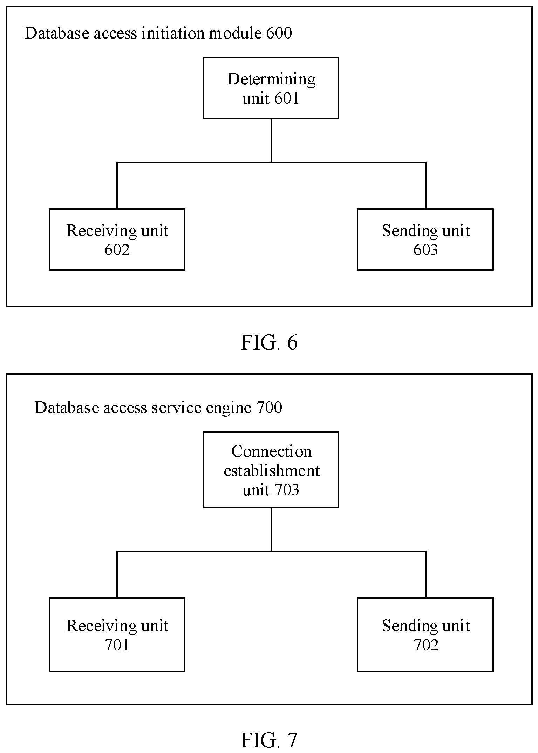

This application further provides a database access initiation module (for example, the database access initiation module 111, the database access initiation module 112, or the database access initiation module 113). The database access initiation module is deployed on a computing device (for example, a server) in this application. The database access initiation module includes functional units configured for the database access initiation module to implement the database access method. How to divide the functional units in the database access initiation module is not limited in this application. The following provides an example of division of the functional units, as shown in FIG. 6.

A database access initiation module 600 is shown in FIG. 6. The database access initiation module 600 includes:
a receiving unit 602, configured to receive an access request of the application, where the access request carries an identifier of a database instance;
a determining unit 601, configured to determine a database access service engine, where the database access service engine is independent of the application, and the database access service engine is configured to establish a connection used to access the database instance; and
a sending unit 603, configured to send the access request to the determined database access service engine, where the database access service engine has a capability of sending the access request to the database instance.

Optionally, the determining unit 601 is configured to select one database access service engine from a plurality of database access service engines.

Optionally, the determining unit 601 is configured to select one database access service engine from a plurality of database access service engines based on load of the plurality of database access service engines.

Optionally, the determining unit 601 is configured to select a database access service engine with minimum load from a plurality of database access service engines.

Optionally, the determining unit 601 is configured to determine, based on the identifier that is of the database instance and that is carried in the access request, a database access service engine bound to the identifier of the database instance.

Optionally, the determining unit 601 is configured to determine, based on an identifier that is of a database access scheduling module and that is carried in the access request, a database access service engine bound to the database access scheduling module. The database access scheduling module is configured to send the access request received from the database access service engine to the database instance.

Optionally, the receiving unit 602 is configured to receive a processing result, corresponding to the access request, that is sent by the database access service engine. Correspondingly, the sending unit 603 is configured to send the processing result to the application.

This application further provides a database access service engine (for example, the database access service engine 121, the database access service engine 122, or the database access service engine 123). The database access service engine is deployed on a computing device (for example, a server) in this application. The database access service engine includes functional units configured for the database access initiation module to implement the database access method. How to divide the functional units in the database access service engine is not limited in this application. The following provides an example of division of the functional units, as shown in FIG. 7.

A database access service engine 700 is shown in FIG. 7. The database access service engine 700 includes:
a receiving unit 701, configured to receive an access request sent by a database access initiation module, where the access request carries an identifier of a database instance;
a sending unit 702, configured to send the access request to the database instance, or send the access request to a database access scheduling module associated with the database instance.

Optionally, the database access service engine includes:
a connection establishment unit 703, configured to establish a connection between the database access service engine and the database instance based on the identifier of the database instance, where the connection is used to communicate data between the database access service engine and the database instance.

Optionally, the sending unit 702 is configured to send, based on a keyword carried in the access request, the access request to the database instance through a connection, identified by the keyword, that has been established between the database access service engine and the database instance.

Optionally, the sending unit 702 is configured to send the access request to the database access scheduling module based on an identifier, of the database access scheduling module, that is carried in the access request.

Optionally, the receiving unit 701 is configured to receive a processing result that is corresponding to the access request and that is sent by the database instance 701, or receive a processing result that is corresponding to the access request and that is sent by the database access scheduling module.

Correspondingly, the sending unit 702 is configured to send the processing result corresponding to the access request to the database access initiation module.

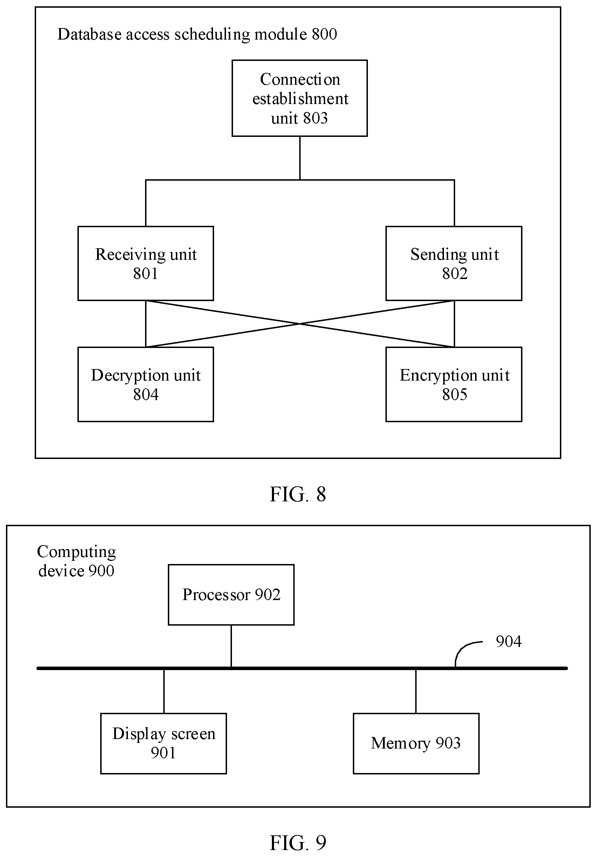

This application further provides a database access scheduling module (for example, the database access scheduling module 331, the database access scheduling module 332, or the database access scheduling module 333). The database access scheduling module is deployed on a computing device (for example, a server) in this application. The database access scheduling module includes functional units configured for the database access scheduling module to implement the database access method. How to divide the functional units in the database access scheduling module is not limited in this application. The following provides an example of division of the functional units, as shown in FIG. 8.

A database access scheduling module 800 is shown in FIG. 8, and the database access scheduling module 800 includes:
a connection establishment unit 803, configured to establish a communication connection to a database access service engine by using an identifier of the database access service engine;
a receiving unit 801, configured to receive an access request sent by the database access service engine, where the access request carries an identifier of a database instance; and
a sending unit 802, configured to send the access request to the database instance.

Optionally, the identifier of the database access service engine is an IP address of the database access service engine.

Optionally, the connection establishment unit 803 is configured to send a request for establishing the communication connection to the database access service engine. The request carries the identifier of the database access service engine and a public keyword of the database access service engine. The public keyword of the database access service engine is used by the database access engine to authenticate establishment of the communication connection.

Optionally, the database access scheduling module 800 includes:
a decryption unit 804, configured to: when the access request received by the database access scheduling module from the database access service engine is an access request encrypted based on a public keyword of the database access scheduling module, decrypt the access request from the encrypted access request by using a private keyword of the database access scheduling module, so that the sending unit 802 can send the decrypted access request to the database instance.

Optionally, the receiving unit 801 is configured to receive a processing result, corresponding to the access request, that is sent by the database instance.

The sending unit 802 is configured to send the processing result to the database access service engine.

Optionally, the database access scheduling module 800 includes:
an encryption unit 805, configured to encrypt the processing result by using the public keyword of the database access service engine, so that the sending unit 802 can send the encrypted processing result to the database access service engine.

Optionally, FIG. 9 is a schematic diagram of a possible basic hardware architecture of the computing device in this application.

Refer to FIG. 9. A computing device 900 includes a processor 901, a memory 902, a communications interface 903, and a bus 904.

On the computing device 900, there may be one or more processors 901. FIG. 9 shows only one of the processors 901. Optionally, the processor 901 may be a central processing unit (central processing unit, CPU). If the computing device 900 includes a plurality of processors 901, the plurality of processors 901 may be of a same type or different types. Optionally, the plurality of processors 901 on the computing device 900 may be integrated into a multicore processor.

The memory 902 stores a computer instruction and data. The memory 902 may store a computer instruction and data required for implementing the database access method provided in this application. For example, the memory 902 stores an instruction used to implement that the database access initiation module performs a step in the database access method. For another example, the memory 902 stores an instruction used to implement that the database access service network engine performs a step in the database access method. For another example, the memory 902 stores an instruction used to implement that the database access implementation module (for example, the database instance or the database access scheduling module) performs a step in the database access method. The memory 902 may be any one or any combination of the following storage media: a nonvolatile memory (for example, a read-only memory (ROM), a solid-state drive (SSD), a hard disk drive (HDD), or an optical disc) and a volatile memory.

The communications interface 903 may be any one or any combination of the following components with a network access function, such as a network interface (for example, an Ethernet interface) and a wireless network interface card.

The communications interface 903 is configured to perform data communication between the computing device 900 and another computing device or terminal.

A thick line is used to represent the bus 904 in FIG. 9. The processor 901, the memory 902, and the communications interface 903 may be connected by using the bus 904. In this way, by using the bus 904, the processor 901 may access the memory 902, and may further exchange data with the another computing device or terminal through the communications interface 903.

In this application, the computing device 900 executes the computer instruction in the memory 902, so that the computing device 900 is enabled to implement the database access method provided in this application. For example, the computing device is enabled to perform the steps performed by the database access initiation module in the database access method. For another example, the computing device is enabled to perform the steps performed by the database access service engine in the database access method. For another example, the computing device is enabled to perform the steps performed by the database access implementation module (for example, the database instance or the database access scheduling module) in the database access method.

This application provides a computer-readable storage medium. The computer-readable storage medium stores a computer instruction. When the processor 901 of the computing device 900 executes the computer instruction, the computing device 900 performs the steps performed by the database access initiation module in the database access method, or the computing device 900 performs the steps performed by the database access service engine in the database access method, or the computing device 900 performs the steps performed by the database access implementation module (for example, the database instance or the database access scheduling module) in the database access method.

This application provides a computer program product. The computer program product includes a computer instruction, and the computer instruction is stored in a computer-readable storage medium. The processor 901 of the computing device 900 may read the computer instruction from the computer-readable storage medium. The processor 901 executes the computer instruction, so that the computing device 900 is enabled to perform the steps performed by the database access initiation module in the database access method, or the computing device 900 is enabled to perform the steps performed by the database access service engine in the database access method, or the computing device 900 is enabled to perform the steps performed by the database access implementation module (for example, the database instance or the database access scheduling module) in the database access method.

This application provides a computer program product. The computer program product includes a computer instruction, and the computer instruction is stored in a computer-readable storage medium. The processor 901 of the computing device 900 may read the computer instruction from the computer-readable storage medium. The processor 901 executes the computer instruction, so that the computing device 900 is enabled to perform the steps performed by the database access initiation module in the database access method, or the computing device 900 is enabled to perform the steps performed by the database access service engine in the database access method, or the computing device 900 is enabled to perform the steps performed by the database access implementation module (for example, the database instance or the database access scheduling module) in the database access method.

## Claims

1. A database access method, wherein the method comprises:
actively establishing, by a database access scheduling module (331-332, 800) in a local area network (381, 382), a communication connection to a database access service engine (121-123, 700) in a public cloud by using an identifier of the database access service engine (121-123, 700);
receiving, by a database access initiation module (111-113, 331, 600) of an application, an access request of the application, wherein the access request carries an identifier of the database instance (371-372) in the local area network (381, 382);
determining, by the database access initiation module (111-113, 331, 600), a database access service engine (121-123, 700), wherein the database access service engine (121-123, 700) is independent of the application, both the database access service engine (121-123, 700) and the application are in a public cloud, and the database access service engine (121-123, 700) is configured to establish a connection used to access the database instance (231-233, 373-374); and
sending (S515), by the database access initiation module (111-113, 331, 600), the access request to the determined database access service engine (121-123, 700), wherein the database access service engine (121-123, 700) has a capability of sending (S516) the access request to the database access scheduling module (331-332, 800) in the local area network (381, 382) and the database access scheduling module (331-332, 800) sends (S517) the access request to the database instance (371-372).

2. The method according to claim 1, wherein the determining, by the database access initiation module (111-113, 331, 600), a database access service engine (121-123, 700) comprises:
selecting, by the database access initiation module (111-113, 331, 600), one database access service engine (121-123, 700) from a plurality of database access service engines (121-123, 700).

3. The method according to claim 1, wherein the determining, by the database access initiation module (111-113, 331, 600), a database access service engine (121-123, 700) comprises:
selecting, by the database access initiation module (111-113, 331, 600), one database access service engine (121-123, 700) from a plurality of database access service engines (121-123, 700) based on load of the plurality of database access service engines (121-123, 700).

4. The method according to claim 1, wherein the determining, by the database access initiation module (111-113, 331, 600), a database access service engine (121-123, 700) comprises:
selecting, by the database access initiation module (111-113, 331, 600), a database access service engine (121-123, 700) with minimum load from a plurality of database access service engines (121-123, 700).

5. The method according to claim 1, wherein the determining, by the database access initiation module (111-113, 331, 600), a database access service engine (121-123, 700) comprises:
determining, by the database access initiation module (111-113, 331, 600) based on the identifier that is of the database instance (231-233, 371-374, 701) and that is carried in the access request, a database access service engine (121-123, 700) bound to the identifier of the database instance (231-233, 371-374, 701).

6. The method according to claim 1, wherein the determining, by the database access initiation module (111-113, 331, 600), a database access service engine (121-123, 700) comprises:
determining, by the database access initiation module (111-113, 331, 600) based on an identifier that is of a database access scheduling module (331-332, 800) and that is carried in the access request, a database access service engine (121-123, 700) bound to the database access scheduling module (331-332, 800), wherein the database access scheduling module (331-332, 800) is configured to send the access request received from the database access service engine (121-123, 700) to the database instance (371-372).

7. The method according to any one of claims 1 to 6, wherein the method comprises:
receiving, by the database access initiation module (111-113, 331, 600), a processing result that is corresponding to the access request and that is sent by the database access service engine (121-123, 700); and
sending, by the database access initiation module (111-113, 331, 600), the processing result to the application.

8. A database access method, wherein the method comprises:
actively establishing, by a database access scheduling module (331-332, 800) in a local area network (381, 382), a communication connection to a database access service engine (121-123, 700) in a public cloud by using an identifier of the database access service engine (121-123, 700);
receiving (S515), by a database access service engine (121-123, 700), an access request sent by a database access initiation module (111-113, 331, 600) of an application, wherein the access request carries an identifier of a database instance (371-372) in a local area network (381, 382), and both the database access service engine (121-123, 700) and the application are in a public cloud;
sending (S516), by the database access service engine, the access request to a database access scheduling module (331-332, 800) associated with the database instance, and the database access scheduling module (331-332, 800) sends (S517) the access request to the database instance in the local area network (381, 382).

9. The method according to claim 8, wherein the sending, by the database access service engine (121-123, 700), the access request to a database access scheduling module (331-332, 800) associated with the database instance (371-372) comprises:
sending, by the database access service engine (121-123, 700), the access request to the database access scheduling module (331-332, 800) based on an identifier, of the database access scheduling module (331-332, 800), that is carried in the access request.

10. The method according to claim 8, wherein the method further comprises:
receiving, by the database access service engine, a processing result that is corresponding to the access request and that is sent by the database access scheduling module (331-332, 800); and
sending, by the database access service engine (121-123, 700), the processing result corresponding to the access request to the database access initiation module (111-113, 331, 600).

11. A database access initiation module (111-113, 331, 600), wherein the database access initiation module (111-113, 331, 600) comprises:
a receiving unit (602, 701, 801), configured to receive an access request of the application, wherein the access request carries an identifier of a database instance (231-233, 371-374, 701) in a local area network (381, 382);
a determining unit (601), configured to determine a database access service engine (121-123, 700), wherein the database access service engine (121-123, 700) is independent of the application, both the database access service engine (121-123, 700) and the application are in a public cloud, and the database access service engine (121-123, 700) is configured to establish a connection used to access the database instance (231-233, 373-374); and
a sending unit (603, 702, 802), configured to send the access request to the determined database access service engine (121-123, 700), wherein the database access service engine (121-123, 700) has a capability of sending the access request to a database access scheduling module (331-332, 800) in the local area network (381, 382) and the database access scheduling module (331-332, 800) sends the access request to the database instance (371-372), and wherein the database access scheduling module (331-332, 800) in the local area network (381, 382) has a capability of actively establishing a communication connection to the database access service engine (121-123, 700) in the public cloud by using the identifier of the database access service engine(121-123,700).

12. The database access initiation module (111-113, 331, 600) according to claim 11, wherein
the determining unit (601) is configured to select one database access service engine (121-123, 700) from a plurality of database access service engines (121-123, 700).

13. The database access initiation module (111-113, 331, 600) according to claim 11, wherein
the determining unit (601) is configured to select one database access service engine (121-123, 700) from a plurality of database access service engines (121-123, 700) based on load of the plurality of database access service engines (121-123, 700).

14. The database access initiation module (111-113, 331, 600) according to claim 11, wherein
the determining unit (601) is configured to select a database access service engine (121-123, 700) with minimum load from a plurality of database access service engines (121-123, 700).

15. The database access initiation module (111-113, 331, 600) according to claim 11, wherein
the determining unit (601) is configured to determine, based on the identifier that is of the database instance (231-233, 371-374, 701) and that is carried in the access request, a database access service engine (121-123, 700) bound to the identifier of the database instance (231-233, 371-374, 701).

16. The database access initiation module (111-113, 331, 600) according to claim 11, wherein
the determining unit (601) is configured to determine, based on an identifier that is of a database access scheduling module (331-332, 800) and that is carried in the access request, a database access service engine (121-123, 700) bound to the database access scheduling module (331-332, 800), wherein the database access scheduling module (331-332, 800) is configured to send the access request received from the database access service engine (121-123, 700) to the database instance (371-372).

17. The database access initiation module (111-113, 331, 600) according to any one of claims 11 to 16, wherein
the receiving unit (602, 701, 801) is configured to receive a processing result that is corresponding to the access request and that is sent by the database access service engine (121-123, 700); and
the sending unit (603, 702, 802) is configured to send the processing result to the application.

18. A database access service engine (121-123, 700), wherein the database access service engine (121-123, 700) comprises:
a receiving unit (602, 701, 801), configured to receive an access request sent by a database access initiation module (111-113, 331, 600) of an application, wherein the access request carries an identifier of a database instance (231-233, 371-374, 701) in a local area network (381, 382), and both the database access service engine (121-123, 700) and the application are in a public cloud;
a sending unit (603, 702, 802), configured to send the access request to a database access scheduling module (331-332, 800) associated with the database instance, and the database access scheduling module (331-332, 800) sends the access request to the database instance in the local area network (381, 382), and wherein the database access scheduling module (331-332, 800) in the local area network (381, 382) has a capability of actively establishing a communication connection to the database access service engine (121-123, 700) in the public cloud by using the identifier of the database access service engine (121-123, 700).

19. The database access service engine (121-123, 700) according to claim 18, wherein
the sending unit (603, 702, 802) is configured to send the access request to the database access scheduling module (331-332, 800) based on an identifier, of the database access scheduling module (331-332, 800), that is carried in the access request.

20. The database access service engine (121-123, 700) according to claim 18, wherein
the receiving unit (602, 701, 801) is configured to receive a processing result that is corresponding to the access request and that is sent by the database access scheduling module (331-332, 800); and
the sending unit (603, 702, 802) is configured to send the processing result corresponding to the access request to the database access initiation module (111-113, 331, 600).

## Patentansprüche

1. Datenbankzugriffsverfahren, wobei das Verfahren Folgendes umfasst:
aktives Herstellen, durch ein Datenbankzugriffsplanungsmodul (331-332, 800) in einem lokalen Netzwerk (381, 382), einer Kommunikationsverbindung mit einer Datenbankzugriffs-Dienst-Engine (121-123, 700) in einer öffentlichen Cloud durch Verwenden eines Identifikators der Datenbankzugriffs-Dienst-Engine (121-123, 700);
Empfangen, durch ein Datenbankzugriffsinitiierungsmodul (111-113, 331, 600), einer Anwendung, einer Zugriffsanforderung der Anwendung, wobei die Zugriffsanforderung einen Identifikator der Datenbankinstanz (371-372) in dem lokalen Netzwerk (381, 382) trägt;
Bestimmen, durch das Datenbankzugriffsinitiierungsmodul (111-113, 331, 600), einer Datenbankzugriffs-Dienst-Engine (121-123, 700), wobei die Datenbankzugriffs-Dienst-Engine (121-123, 700) von der Anwendung unabhängig ist, sowohl die Datenbankzugriffs-Dienst-Engine (121-123, 700) als auch die Anwendung in einer öffentlichen Cloud sind und die Datenbankzugriffs-Dienst-Engine (121-123, 700) zum Herstellen einer Verbindung, die zum Zugreifen auf die Datenbankinstanz (231-233, 373-374) verwendet wird, ausgelegt ist; und
Senden (S515), durch das Datenbankzugriffsinitiierungsmodul (111-113, 331, 600), der Zugriffsanforderung an die bestimmte Datenbankzugriffs-Dienst-Engine (121-123, 700), wobei die Datenbankzugriffs-Dienst-Engine (121-123, 700) eine Fähigkeit zum Senden (S516) der Zugriffsanforderung an das Datenbankzugriffsplanungsmodul (331-332, 800) in dem lokalen Netzwerk (381, 382) aufweist und das Datenbankzugriffsplanungsmodul (331-332, 800) die Zugriffsanforderung an die Datenbankinstanz (371-372) sendet (S517).

2. Verfahren nach Anspruch 1, wobei das Bestimmen, durch das Datenbankzugriffsinitiierungsmodul (111-113, 331, 600), einer Datenbankzugriffs-Dienst-Engine (121-123, 700) Folgendes umfasst:
Auswählen, durch das Datenbankzugriffsinitiierungsmodul (111-113, 331, 600), einer Datenbankzugriffs-Dienst-Engine (121-123, 700) aus einer Vielzahl von Datenbankzugriffs-Dienst-Engines (121-123, 700).

3. Verfahren nach Anspruch 1, wobei das Bestimmen, durch das Datenbankzugriffsinitiierungsmodul (111-113, 331, 600), einer Datenbankzugriffs-Dienst-Engine (121-123, 700) Folgendes umfasst:
Auswählen, durch das Datenbankzugriffsinitiierungsmodul (111-113, 331, 600), einer Datenbankzugriffs-Dienst-Engine (121-123, 700) aus einer Vielzahl von Datenbankzugriffs-Dienst-Engines (121-123, 700) basierend auf einer Last der Vielzahl von Datenbankzugriffs-Dienst-Engines (121-123, 700).

4. Verfahren nach Anspruch 1, wobei das Bestimmen, durch das Datenbankzugriffsinitiierungsmodul (111-113, 331, 600), einer Datenbankzugriffs-Dienst-Engine (121-123, 700) Folgendes umfasst:
Auswählen, durch das Datenbankzugriffsinitiierungsmodul (111-113, 331, 600), einer Datenbankzugriffs-Dienst-Engine (121-123, 700) mit einer minimalen Last aus einer Vielzahl von Datenbankzugriffs-Dienst-Engines (121-123, 700).

5. Verfahren nach Anspruch 1, wobei das Bestimmen, durch das Datenbankzugriffsinitiierungsmodul (111-113, 331, 600), einer Datenbankzugriffs-Dienst-Engine (121-123, 700) Folgendes umfasst:
Bestimmen, durch das Datenbankzugriffsinitiierungsmodul (111-113, 331, 600) basierend auf dem Identifikator, der von der Datenbankinstanz (231-233, 371-374, 701) stammt und der in der Zugriffsanforderung getragen wird, einer Datenbankzugriffs-Dienst-Engine (121-123, 700), die an den Identifikator der Datenbankinstanz (231-233, 371-374, 701) gebunden ist.

6. Verfahren nach Anspruch 1, wobei das Bestimmen, durch das Datenbankzugriffsinitiierungsmodul (111-113, 331, 600), einer Datenbankzugriffs-Dienst-Engine (121-123, 700) Folgendes umfasst:
Bestimmen, durch das Datenbankzugriffsinitiierungsmodul (111-113, 331, 600) basierend auf einem Identifikator, der von einem Datenbankzugriffsplanungsmodul (331-332, 800) stammt und der in der Zugriffsanforderung getragen wird, einer Datenbankzugriffs-Dienst-Engine (121-123, 700), die an das Datenbankzugriffsplanungsmodul (331-332, 800) gebunden ist, wobei das Datenbankzugriffsplanungsmodul (331-332, 800) zum Senden der Zugriffsanforderung, die von der Datenbankzugriffs-Dienst-Engine (121-123, 700) empfangen wird, an die Datenbankinstanz (371-372) ausgelegt ist.

7. Verfahren nach einem der Ansprüche 1 bis 6, wobei das Verfahren Folgendes umfasst:
Empfangen, durch das Datenbankzugriffsinitiierungsmodul (111-113, 331, 600), eines Verarbeitungsergebnisses, das der Zugriffsanforderung entspricht und das durch die Datenbankzugriffs-Dienst-Engine (121-123, 700) gesendet wird; und
Senden, durch das Datenbankzugriffsinitiierungsmodul (111-113, 331, 600), des Verarbeitungsergebnisses an die Anwendung.

8. Datenbankzugriffsverfahren, wobei das Verfahren Folgendes umfasst:
aktives Herstellen, durch ein Datenbankzugriffsplanungsmodul (331-332, 800) in einem lokalen Netzwerk (381, 382), einer Kommunikationsverbindung mit einer Datenbankzugriffs-Dienst-Engine (121-123, 700) in einer öffentlichen Cloud durch Verwenden eines Identifikators der Datenbankzugriffs-Dienst-Engine (121-123, 700);
Empfangen (S515), durch eine Datenbankzugriffs-Dienst-Engine (121-123, 700), einer Zugriffsanforderung, die durch ein Datenbankzugriffsinitiierungsmodul (111-113, 331, 600) einer Anwendung gesendet wird, wobei die Zugriffsanforderung einen Identifikator einer Datenbankinstanz (371-372) in einem lokalen Netzwerk (381, 382) trägt und sowohl die Datenbankzugriffs-Dienst-Engine (121-123, 700) als auch die Anwendung in einer öffentlichen Cloud sind;
Senden (S516), durch die Datenbankzugriffs-Dienst-Engine, der Zugriffsanforderung an ein Datenbankzugriffsplanungsmodul (331-332, 800), das der Datenbankinstanz zugeordnet ist, und wobei das Datenbankzugriffsplanungsmodul (331-332, 800) die Zugriffsanforderung an die Datenbankinstanz in dem lokalen Netzwerk (381, 382) sendet (S517).

9. Verfahren nach Anspruch 8, wobei das Senden, durch die Datenbankzugriffs-Dienst-Engine (121-123, 700), der Zugriffsanforderung an ein Datenbankzugriffsplanungsmodul (331-332, 800), das der Datenbankinstanz (371-372) zugeordnet ist, Folgendes umfasst:
Senden, durch die Datenbankzugriffs-Dienst-Engine (121-123, 700), der Zugriffsanforderung an das Datenbankzugriffsplanungsmodul (331-332, 800) basierend auf einem Identifikator, des Datenbankzugriffsplanungsmoduls (331-332, 800), der in der Zugriffsanforderung getragen wird.

10. Verfahren nach Anspruch 8, wobei das Verfahren ferner Folgendes umfasst:
Empfangen, durch die Datenbankzugriffs-Dienst-Engine, eines Verarbeitungsergebnisses, das der Zugriffsanforderung entspricht und das durch das Datenbankzugriffsplanungsmodul (331-332, 800) gesendet wird; und
Senden, durch die Datenbankzugriffs-Dienst-Engine (121-123, 700), des Verarbeitungsergebnisses, das der Zugriffsanforderung entspricht, an das Datenbankzugriffsinitiierungsmodul (111-113, 331, 600).

11. Datenbankzugriffsinitiierungsmodul (111-113, 331, 600), wobei das Datenbankzugriffsinitiierungsmodul (111-113, 331, 600) Folgendes umfasst:
eine Empfangseinheit (602, 701, 801), die zum Empfangen einer Zugriffsanforderung der Anwendung ausgelegt ist, wobei die Zugriffsanforderung einen Identifikator einer Datenbankinstanz (231-233, 371-374, 701) in einem lokalen Netzwerk (381, 382) trägt;
eine Bestimmungseinheit (601), die zum Bestimmen einer Datenbankzugriffs-Dienst-Engine (121-123, 700) ausgelegt ist, wobei die Datenbankzugriffs-Dienst-Engine (121-123, 700) von der Anwendung unabhängig ist, sowohl die Datenbankzugriffs-Dienst-Engine (121-123, 700) als auch die Anwendung in einer öffentlichen Cloud sind und die Datenbankzugriffs-Dienst-Engine (121-123, 700) zum Herstellen einer Verbindung, die zum Zugreifen auf die Datenbankinstanz (231-233, 373-374) verwendet wird, ausgelegt ist; und
eine Sendeeinheit (603, 702, 802), die zum Senden der Zugriffsanforderung an die bestimmte Datenbankzugriffs-Dienst-Engine (121-123, 700) ausgelegt ist, wobei die Datenbankzugriffs-Dienst-Engine (121-123, 700) eine Fähigkeit zum Senden der Zugriffsanforderung an ein Datenbankzugriffsplanungsmodul (331-332, 800) in dem lokalen Netzwerk (381, 382) aufweist und das Datenbankzugriffsplanungsmodul (331-332, 800) die Zugriffsanforderung an die Datenbankinstanz (371-372) sendet und wobei das Datenbankzugriffsplanungsmodul (331-332, 800) in dem lokalen Netzwerk (381, 382) eine Fähigkeit zum aktiven Herstellen einer Kommunikationsverbindung mit der Datenbankzugriffs-Dienst-Engine (121-123, 700) in der öffentlichen Cloud durch Verwenden des Identifikators der Datenbankzugriffs-Dienst-Engine (121-123, 700) aufweist.

12. Datenbankzugriffsinitiierungsmodul (111-113, 331, 600) nach Anspruch 11, wobei die Bestimmungseinheit (601) zum Auswählen einer Datenbankzugriffs-Dienst-Engine (121-123, 700) aus einer Vielzahl von Datenbankzugriffs-Dienst-Engines (121-123, 700) ausgelegt ist.

13. Datenbankzugriffsinitiierungsmodul (111-113, 331, 600) nach Anspruch 11, wobei die Bestimmungseinheit (601) zum Auswählen einer Datenbankzugriffs-Dienst-Engine (121-123, 700) aus einer Vielzahl von Datenbankzugriffs-Dienst-Engines (121-123, 700) basierend auf einer Last der Vielzahl von Datenbankzugriffs-Dienst-Engines (121-123, 700) ausgelegt ist.

14. Datenbankzugriffsinitiierungsmodul (111-113, 331, 600) nach Anspruch 11, wobei die Bestimmungseinheit (601) zum Auswählen einer Datenbankzugriffs-Dienst-Engine (121-123, 700) mit einer minimalen Last aus einer Vielzahl von Datenbankzugriffs-Dienst-Engines (121-123, 700) ausgelegt ist.

15. Datenbankzugriffsinitiierungsmodul (111-113, 331, 600) nach Anspruch 11, wobei die Bestimmungseinheit (601) zum Bestimmen, basierend auf dem Identifikator, der von der Datenbankinstanz (231-233, 371-374, 701) stammt und der in der Zugriffsanforderung getragen wird, einer Datenbankzugriffs-Dienst-Engine (121-123, 700), die an den Identifikator der Datenbankinstanz (231-233, 371-374, 701) gebunden ist, ausgelegt ist.

16. Datenbankzugriffsinitiierungsmodul (111-113, 331, 600) nach Anspruch 11, wobei
die Bestimmungseinheit (601) zum Bestimmen, basierend auf einem Identifikator, der von einem Datenbankzugriffsplanungsmodul (331-332, 800) stammt und der in der Zugriffsanforderung getragen wird, einer Datenbankzugriffs-Dienst-Engine (121-123, 700), die an das Datenbankzugriffsplanungsmodul (331-332, 800) gebunden ist, ausgelegt ist, wobei das Datenbankzugriffsplanungsmodul (331-332, 800) zum Senden der Zugriffsanforderung, die von der Datenbankzugriffs-Dienst-Engine (121-123, 700) empfangen wird, an die Datenbankinstanz (371-372) ausgelegt ist.

17. Datenbankzugriffsinitiierungsmodul (111-113, 331, 600) nach einem der Ansprüche 11 bis 16, wobei
die Empfangseinheit (602, 701, 801) zum Empfangen eines Verarbeitungsergebnisses, das der Zugriffsanforderung entspricht und das durch die Datenbankzugriffs-Dienst-Engine (121-123, 700) gesendet wird, ausgelegt ist und
die Sendeeinheit (603, 702, 802) zum Senden des Verarbeitungsergebnisses an die Anwendung ausgelegt ist.

18. Datenbankzugriffs-Dienst-Engine (121-123, 700), wobei die Datenbankzugriffs-Dienst-Engine (121-123, 700) Folgendes umfasst:
eine Empfangseinheit (602, 701, 801), die zum Empfangen einer Zugriffsanforderung, die durch ein Datenbankzugriffsinitiierungsmodul (111-113, 331, 600) einer Anwendung gesendet wird, ausgelegt ist, wobei die Zugriffsanforderung einen Identifikator einer Datenbankinstanz (231-233, 371-374, 701) in einem lokalen Netzwerk (381, 382) trägt und sowohl die Datenbankzugriffs-Dienst-Engine (121-123, 700) als auch die Anwendung in einer öffentlichen Cloud sind;
eine Sendeeinheit (603, 702, 802), die zum Senden der Zugriffsanforderung an ein Datenbankzugriffsplanungsmodul (331-332, 800), das der Datenbankinstanz zugeordnet ist, ausgelegt ist, und wobei das Datenbankzugriffsplanungsmodul (331-332, 800) die Zugriffsanforderung an die Datenbankinstanz in dem lokalen Netzwerk (381, 382) sendet und wobei das Datenbankzugriffsplanungsmodul (331-332, 800) in dem lokalen Netzwerk (381, 382) eine Fähigkeit zum aktiven Herstellen einer Kommunikationsverbindung mit der Datenbankzugriffs-Dienst-Engine (121-123, 700) in der öffentlichen Cloud durch Verwenden des Identifikators der Datenbankzugriffs-Dienst-Engine (121-123, 700) aufweist.

19. Datenbankzugriffs-Dienst-Engine (121-123, 700) nach Anspruch 18, wobei
die Sendeeinheit (603, 702, 802) zum Senden der Zugriffsanforderung an das Datenbankzugriffsplanungsmodul (331-332, 800) basierend auf einem Identifikator, des Datenbankzugriffsplanungsmoduls (331-332, 800), der in der Zugriffsanforderung getragen wird, ausgelegt ist.

20. Datenbankzugriffs-Dienst-Engine (121-123, 700) nach Anspruch 18, wobei die Empfangseinheit (602, 701, 801) zum Empfangen eines Verarbeitungsergebnisses, das der Zugriffsanforderung entspricht und das durch das Datenbankzugriffsplanungsmodul (331-332, 800) gesendet wird, ausgelegt ist und
die Sendeeinheit (603, 702, 802) zum Senden des Verarbeitungsergebnisses, das der Zugriffsanforderung entspricht, an das Datenbankzugriffsinitiierungsmodul (111-113, 331, 600) ausgelegt ist.

## Revendications

1. Procédé d'accès à base de données, ce procédé comprenant :
l'établissement actif, par un module de programmation d'accès à base de données (331-332, 800) dans un réseau local (381, 382), d'une connexion de communication à un moteur de service d'accès à base de données (121-123, 700) dans un nuage public en utilisant un identifiant de ce moteur de service d'accès à base de données (121-123, 700) ;
la réception, par un module de lancement d'accès à base de données (111-113, 331, 600) d'une application, d'une demande d'accès de cette application, cette demande d'accès acheminant un identifiant de l'instance de base de données (371-372) dans le réseau local (381, 382) ;
la détermination, par le module de lancement d'accès à base de données (111-113, 331, 600), d'un moteur de service d'accès à base de données (121-123, 700), ce moteur de service d'accès à base de données (121-123, 700) étant indépendant de l'application, ce moteur de service d'accès à base de données (121-123, 700) et l'application étant tous les deux dans un nuage public, et ce moteur de service d'accès à base de données (121-123, 700) étant configuré de façon à établir une connexion utilisée pour accéder à l'instance de base de données (231-233, 373-374) ; et
l'envoi (S515), par le module de lancement d'accès à base de données (111-113, 331, 600), de la demande d'accès au moteur de service d'accès à base de données (121-123, 700) déterminé, ce moteur de service d'accès à base de données (121-123, 700) ayant une capacité d'envoyer (S516) la demande d'accès au module de programmation d'accès à base de données (331-332, 800) dans le réseau local (381, 382) et ce module de programmation d'accès à base de données (331-332, 800) envoyant (S517) la demande d'accès à l'instance de base de données (371-372).

2. Procédé selon la revendication 1, dans lequel la détermination, par le module de lancement d'accès à base de données (111-113, 331, 600), d'un moteur de service d'accès à base de données (121-123, 700) comprend :
la sélection, par le module de lancement d'accès à base de données (111-113, 331, 600), d'un moteur de service d'accès à base de données (121-123, 700) parmi une pluralité de moteurs de service d'accès à base de données (121-123, 700).

3. Procédé selon la revendication 1, dans lequel la détermination, par le module de lancement d'accès à base de données (111-113, 331, 600), d'un moteur de service d'accès à base de données (121-123, 700) comprend :
la sélection, par le module de lancement d'accès à base de données (111-113, 331, 600), d'un moteur de service d'accès à base de données (121-123, 700) parmi une pluralité de moteurs de service d'accès à base de données (121-123, 700) en se basant sur la charge de cette pluralité de moteurs de service d'accès à base de données (121-123, 700).

4. Procédé selon la revendication 1, dans lequel la détermination, par le module de lancement d'accès à base de données (111-113, 331, 600), d'un moteur de service d'accès à base de données (121-123, 700) comprend :
la sélection, par le module de lancement d'accès à base de données (111-113, 331, 600), d'un moteur de service d'accès à base de données (121-123, 700) avec une charge minimum parmi une pluralité de moteurs de service d'accès à base de données (121-123, 700).

5. Procédé selon la revendication 1, dans lequel la détermination, par le module de lancement d'accès à base de données (111-113, 331, 600), d'un moteur de service d'accès à base de données (121-123, 700) comprend :
la détermination, par le module de lancement d'accès à base de données (111-113, 331, 600), en se basant sur l'identifiant qui est celui de l'instance de base de données (231-233, 371-374, 701) et qui est acheminé dans la demande d'accès, d'un moteur de service d'accès (121-123, 700) lié à l'identifiant de l'instance de base de données (231-233, 371-374, 701).

6. Procédé selon la revendication 1, dans lequel la détermination, par le module de lancement d'accès à base de données (111-113, 331, 600), d'un moteur de service d'accès à base de données (121-123, 700) comprend :
la détermination, par le module de lancement d'accès à base de données (111-113, 331, 600), en se basant sur l'identifiant qui est celui d'un module de programmation d'accès à base de données (331-332, 800) et qui est acheminé dans la demande d'accès, d'un moteur de service d'accès à base de données (121-123, 700) lié au module de programmation d'accès à base de données (331-332, 800), le module de programmation d'accès à base de données (331-332, 800) étant configuré de façon à envoyer la demande d'accès reçue du moteur de service d'accès à base de données (121-123, 700) à l'instance de base de données (371-372).

7. Procédé selon l'une quelconque des revendications 1 à 6, ce procédé comprenant :
la réception, par le module de lancement d'accès à base de données (111-113, 331, 600), d'un résultat de traitement qui correspond à la demande d'accès et qui est envoyé par le moteur de service d'accès à base de données (121-123, 700) ; et
l'envoi, par le module de lancement d'accès à base de données (111-113, 331, 600), du résultat de traitement à l'application.

8. Procédé d'accès à base de données, ce procédé comprenant :
l'établissement actif, par un module de programmation d'accès à base de données (331-332, 800) dans un réseau local (381, 382), d'une connexion de communication à un moteur de service d'accès à base de données (121-123, 700) dans un nuage public en utilisant un identifiant de ce moteur de service d'accès à base de données (121-123, 700) ;
la réception (S515), par le moteur de service d'accès à base de données (121-123, 700), d'une demande d'accès envoyée par un module de lancement d'accès à base de données (111-113, 331, 600) d'une application, cette demande d'accès acheminant un identifiant d'une instance de base de données (371-372) dans un réseau local (381, 382), et le moteur de service d'accès à base de données (121-123, 700) et l'application étant tous les deux dans un nuage public ;
l'envoi (S516), par le moteur de service d'accès à base de données, de la demande d'accès à un module de programmation d'accès à base de données (331-332, 800) associé à l'instance de base de données, et le module de programmation d'accès à base de données (331-332, 800) envoyant (S517) la demande d'accès à l'instance de base de données dans le réseau local (381, 382).

9. Procédé selon la revendication 8, dans lequel l'envoi, par le moteur de service d'accès à base de données (121-123, 700), de la demande d'accès à un module de programmation d'accès à base de données (331-332, 800) associé à l'instance de base de données (371-372) comprend :
l'envoi, par le moteur de service d'accès à base de données (121-123, 700), de la demande d'accès au module de programmation d'accès à base de données (331-332, 800) en se basant sur un identifiant, du module de programmation d'accès à base de données (331-332, 800), qui est acheminé dans la demande d'accès.

10. Procédé selon la revendication 8, ce procédé comprenant en outre :
la réception, par le moteur de service d'accès à base de données, d'un résultat de traitement qui correspond à la demande d'accès et qui est envoyé par le module de programmation d'accès à base de données (331-332, 800) ; et
l'envoi, par le moteur de service d'accès à base de données (121-123, 700), du résultat de traitement correspondant à la demande d'accès au module de lancement d'accès à base de données (111-113, 331, 600).

11. Module de lancement d'accès à base de données (111-113, 331, 600), ce module de lancement d'accès à base de données (111-113, 331, 600) comprenant :
une unité de réception (602, 701, 801), configurée de façon à recevoir une demande d'accès de l'application, cette demande d'accès acheminant un identifiant d'une instance de base de données (231-233, 371-374, 701) dans un réseau local (381, 382) ;
une unité de détermination (601), configurée de façon à déterminer un moteur de service d'accès à base de données (121-123, 700), ce moteur de service d'accès à base de données (121-123, 700) étant indépendant de l'application, ce moteur de service d'accès à base de données (121-123, 700) et l'application étant tous les deux dans un nuage public et ce moteur de service d'accès à base de données (121-123, 700) étant configuré de façon à établir une connexion utilisée pour accéder à l'instance de base de données (231-233, 373-374) ; et
une unité d'envoi (603, 702, 802), configurée de façon à envoyer la demande d'accès au moteur de service d'accès à base de données (121-123, 700) déterminé, ce moteur de service d'accès à base de données (121-123, 700) ayant une capacité d'envoyer la demande d'accès à un module de programmation d'accès à base de données (331-332, 800) dans le réseau local (381, 382) et ce module de programmation d'accès à base de données (331-332, 800) envoyant la demande d'accès à l'instance de base de données (371-372), et ce module de programmation d'accès à base de données (331-332, 800) dans le réseau local (381, 382) ayant une capacité d'établir activement une connexion de communication au moteur de service d'accès à base de données (121-123, 700) dans le nuage public en utilisant l'identifiant du moteur de service d'accès à base de données (121-123, 700).

12. Module de lancement d'accès à base de données (111-113, 331, 600) selon la revendication 11, dans lequel
l'unité de détermination (601) est configurée de façon à sélectionner un moteur de service d'accès à base de données (121-123, 700) parmi une pluralité de moteurs de service d'accès à base de données (121-123, 700).

13. Module de lancement d'accès à base de données (111-113, 331, 600) selon la revendication 11, dans lequel
l'unité de détermination (601) est configurée de façon à sélectionner un moteur de service d'accès à base de données (121-123, 700) parmi une pluralité de moteurs de service d'accès à base de données (121-123, 700) en se basant sur la charge de cette pluralité de moteurs de service d'accès à base de données (121-123, 700).

14. Module de lancement d'accès à base de données (111-113, 331, 600) selon la revendication 11, dans lequel
l'unité de détermination (601) est configurée de façon à sélectionner un moteur de service d'accès à base de données (121-123, 700) avec une charge minimum parmi une pluralité de moteurs de service d'accès à base de données (121-123, 700).

15. Module de lancement d'accès à base de données (111-113, 331, 600) selon la revendication 11, dans lequel
l'unité de détermination (601) est configurée de façon à déterminer, en se basant sur l'identifiant qui est celui de l'instance de base de données (231-233, 371-374, 701) et qui est acheminé dans la demande d'accès, un moteur de service d'accès à base de données (121-123, 700) lié à l'identifiant de l'instance de base de données (231-233, 371-374, 701).

16. Module de lancement d'accès à base de données (111-113, 331, 600) selon la revendication 11, dans lequel
l'unité de détermination (601) est configurée de façon à déterminer, en se basant sur un identifiant qui est celui d'un module de programmation d'accès à base de données (331-332, 800) et qui est acheminé dans la demande d'accès, un moteur de service d'accès à base de données (121-123,700) lié au module de programmation d'accès à base de données (331-332, 800), le module de programmation d'accès à base de données (331-332, 800) étant configuré de façon à envoyer la demande d'accès reçue du moteur de service d'accès à base de données (121-123, 700) à l'instance de base de données (371-372).

17. Module de lancement d'accès à base de données (111-113, 331, 600) selon l'une quelconque des revendications 11 à 16, dans lequel
l'unité de réception (602, 701, 801) est configurée de façon à recevoir un résultat de traitement qui correspond à la demande d'accès et qui est envoyé par le moteur de service d'accès à base de données (121-123, 700) ; et dans lequel l'unité d'envoi (603, 702, 802) est configurée de façon à envoyer le résultat de traitement à l'application.

18. Moteur de service d'accès à base de données (121-123, 700), ce moteur de service d'accès à base de données (121-123, 700) comprenant :
une unité de réception (602, 701, 801), configurée de façon à recevoir une demande d'accès envoyée par un module de lancement d'accès à base de données (111-113, 331, 600) d'une application, cette demande d'accès acheminant un identifiant d'une instance de base de données (231-233, 371-374, 701) dans un réseau local (381, 382), et le moteur de service d'accès à base de données (121-123, 700) et l'application étant tous les deux dans un nuage public ;
une unité d'envoi (603, 702, 802), configurée de façon à envoyer la demande d'accès à un module de programmation d'accès à base de données (331-332, 800) associé à l'instance de base de données, et ce module de programmation d'accès à base de données (331-332, 800) envoyant la demande d'accès à l'instance de base de données dans le réseau local (381, 382), et ce module de programmation d'accès à base de données (331-332, 800) dans le réseau local (381, 382) ayant une capacité d'établir activement une connexion de communication au moteur de service d'accès à base de données (121-123, 700) dans le nuage public en utilisant l'identifiant du moteur de service d'accès à base de données (121-123, 700).

19. Moteur de service d'accès à base de données (121-123, 700) selon la revendication 18, dans lequel
l'unité d'envoi (603, 702, 802) est configurée de façon à envoyer la demande d'accès au module de programmation d'accès à base de données (331-332, 800) en se basant sur un identifiant, du module de programmation d'accès à base de données (331-332, 800), qui est acheminé dans la demande d'accès.

20. Moteur de service d'accès à base de données (121-123, 700) selon la revendication 18, dans lequel
l'unité de réception (602, 701, 801) est configurée de façon à recevoir un résultat de traitement qui correspond à la demande d'accès et qui est envoyé par le module de programmation d'accès à base de données (331-332, 800) ; et dans lequel
l'unité d'envoi (603, 702, 802) est configurée de façon à envoyer le résultat de traitement correspondant à la demande d'accès au module de lancement d'accès à base de données (111-113, 331, 600).
